Europäisches Patentamt

**European Patent Office**

**Office européen des brevets**

(11) Publication number: **0 008 189**
A1

(12) # EUROPEAN PATENT APPLICATION

(21) Application number: 79301526.4

(22) Date of filing: 31.07.79

(51) Int. Cl.³: **B 01 D 11/04, C 22 B 60/02**

(30) Priority: 04.08.78 GB 3223178
29.01.79 GB 7903033
20.07.79 GB 7925385

(43) Date of publication of application: **20.02.80**
**Bulletin 80/4**

(84) Designated Contracting States: **BE DE FR GB IT SE**

(71) Applicant: **DAVY INTERNATIONAL (MINERALS & METALS) LIMITED, Ashmore House Bowesfield Lane, Stockton-on-Tees, Cleveland TS18 3HA (GB)**

(72) Inventor: **Gavin, Edward, 4 Hazel Drive, Ferndown Wimborne, Dorset (GB)**
Inventor: **Bonney, Christopher Frank, 32 Blackfriars, Yarm, Cleveland (GB)**
Inventor: **Rowden, George Alan, 3 Windermere Avenue, Redmarshall Stockton-on-Tees, Cleveland (GB)**

(74) Representative: **Eyles, Christopher Thomas et al, BATCHELLOR, KIRK & EYLES 2 Pear Tree Court Farringdon Road, London, EC1R 0DS (GB)**

(54) **Apparatus for effecting liquid-liquid contact.**

(57) A compact, multi-stage, co- or counter-current liquid-liquid extraction apparatus is described having two or more stages (6, 7, 8, 9).

Each stage (6, 7, 8, 9) lies adjacent at least one other stage and comprises a mixing chamber (16) having an agitator (17) mounted thereon, upper and lower settling (25, 21) chambers, and upper and lower baffles (26, 22) between the mixing chamber (16) and the upper and lower settling chambers (25, 21) respectively.

The liquid media to be contacted in each stage are supplied to the mixing chamber (16) from which dispersion flows upwardly and downwardly into the upper (26, 22) and lower baffles.

Disengaged lighter medium flows out from the upper settling chamber over a weir (52) to the next stage, whilst disengaged heavier medium flows out of the lower settling chamber of one stage to the corresponding next stage.

The disengaged heavier medium may overflow a corresponding weir (51) to pass on to the next stage.

Alternatively the disengaged heavier phase may be arranged to flow directly from the lower settling chamber of one stage to the mixing chamber of the next stage. In operation a 1 : 1 phase ratio of the dispersion in the mixing chambers can be maintained despite a different (e.g. 10 : 1) feed rate ratio of the liquid media to the apparatus.

**TITLE MODIFIED**
**see front page**

<u>APPARATUS</u>

This invention relates to an apparatus for effecting liquid-liquid contact in a plurality of stages between an aqueous liquid medium and an organic hydrophobic liquid medium capable of undergoing mass transfer with the aqueous medium.

Liquid-liquid extraction, or solvent extraction as it is often termed, is a widely used process in the chemical and metallurgical industries. Conventional equipment for this purpose generally comprises one or more mixer-settlers arranged in series. In a multi-stage liquid-liquid extraction process a plurality of mixer-settlers will be connected in series; in such a process the two media may flow in co-current from one mixer-settler to the other, but more often than not the two media pass in counter-current one to another through the extraction plant.

Conveniently a mixer-settler comprises a mixer compartment to which the two media are fed and which contains an impeller designed to form a "primary dispersion" of the liquid media one within the other. In such a "primary dispersion" the globules of the dispersed phase are of a size, typically larger than about 100 micrometres in diameter, such that simply on standing under gravity the dispersion disengages into its two constituent phases. The formation of "secondary dispersions" containing smaller globules of dispersed phase, for example with a diameter of about 20 micrometres or less, is to be avoided. From the mixer compartment the

- 2 -

dispersion passes into a separate settling compartment in which the phases are allowed to disengage and from which the disengaged phases pass on, e.g. to the next extraction stage.

In order to optimise mass transfer between the phases it is usual to select a phase ratio approaching 1:1 by volume in the mixer compartment. It is unusual to operate the mixer at phase ratios outside the range of from about 5:1 to about 1:5, and more usually the feeds of the two phases to the mixer are controlled to produce a phase ratio of about 2:1 to about 1:2 within the mixer compartment.

The nature of the extraction process may require, however, that in the overall extraction process, the feed rates of the organic hydrophobic medium to the aqueous medium differ markedly from this preferred mixing ratio of about 1:2 to about 2:1. For example, a uranium extraction plant in which a uranium sulphuric acid leach liquor is contacted in a plurality of stages in counter-current with an organic extractant (e.g. a 5% by volume "Alamine 336" solution in kerosene/2.5% by volume isodecanol), may require the feed rates to be in the ratio aqueous:organic of 10:1 by volume. In order to achieve a 1:1 ratio by volume in the mixer of each stage it is necessary to recycle coalesced organic phase to the mixer compartment by means of an external loop in the ratio of 9 volumes of recycled organic phase for every 10 volumes of

- 3 -

aqueous feed solution supplied. Hence 20 volumes of dispersion are produced for every 10 volumes of aqueous feed solution supplied and the organic phase must undergo recycle many times. This requires significant energy consumption to effect the necessary recycle of organic phase.

In the settler three layers are formed, i.e. an upper disengaged organic layer, a middle dispersion band and a lower disengaged aqueous layer. For a given settling area there is a limiting rate at which dispersion can be fed to the settler, above which rate the dispersion band depth increases until eventually, the settler becomes flooded with dispersion. Since the rate of disengagement of the phases of the dispersion in the settling compartment is limited by the settler area, the plan area of the settler compartment must be sufficiently large to permit disengagement of 20 volumes of dispersion for every 10 volumes of aqueous sulphuric acid leach liquor supplied in order to prevent flooding of the settler with dispersion. This means that the inventory of organic phase must be correspondingly large and that there is considerable hold up of uranium in the settlers of the plant. Furthermore the settler tanks must be large and must be constructed on site. The cost of the settler tanks and the cost of the solvent inventory both constitute significant factors in terms of erection and running costs of the plant. Also the large surface areas of the settlers represent a considerable fire hazard. The

- 4 -

cost of providing fire prevention equipment is also a
significant factor in many parts of the world.

The present invention seeks to provide a design
of multi-stage liquid-liquid extraction plant with reduced
settler area (and hence reduced cost) which can be
operated at disparate organic:aqueous feed ratios of, for
example, 1:10 whilst maintaining a favourable ratio for
mass transfer, for example 1:1, in the mixing chamber
without recourse to external recycle of one of the
phases.

According to the present invention there is
provided apparatus for effecting liquid-liquid contact in
a plurality of stages between an aqueous liquid medium and
an organic hydrophobic liquid medium capable of undergoing
mass transfer with the aqueous liquid medium, comprising:

a first mixer-settler;

a second mixer-settler adjacent the first
mixer-settler;

each mixer-settler comprising:

a mixing chamber;

agitator means in the mixing chamber for
mixing the aqueous and organic hydrophobic
liquid media so as to form a dispersion of
globules of one medium dispersed in the other,
which globules are of a size such that, upon
standing under gravity, the dispersion is
capable of disengaging substantially completely
into two separate layers;

- 5 -

an upper settling chamber above the mixing chamber;

a lower settling chamber below the mixing chamber; and

upper and lower baffle means extending across the mixer-settler so as to divide the mixing chamber from the upper settling chamber and the lower settling chamber respectively, each baffle means being adapted to provide a plurality of flow paths for liquid between the mixing chamber and the respective settling chamber and to permit maintenance in the respective settling chamber of conditions favouring dispersion disengagement despite turbulent mixing conditions in the mixing chamber;

means for supplying the heavier medium of the two to the mixing chamber of the first mixer-settler;

means for removing disengaged heavier medium from the lower settling chamber of the second mixer-settler;

means for supplying the lighter medium of the two to the mixing chamber of one of the first and second mixer-settlers;

means for removing disengaged lighter medium from the upper settling chamber of the

- 6 -

other one of the first and second mixer-
settlers;

weir means over which disengaged lighter
medium from the upper settling chamber of
the said one mixer-settler may overflow;
first conduit means for passing disengaged
lighter medium that overflows the weir means
from the said one mixer-settler to the mixing
chamber of the said other mixer-settler; and
second conduit means for passing disengaged
heavier medium from the lower settling chamber
of the first mixer-settler to the mixing chamber of the
second mixer-settler.

In the apparatus of this invention the first
conduit means preferably extends from a level at which
disengaged lighter medium collects in the upper chamber of
the said one mixer-settler down through the zone of the
upper baffle means to the mixing chamber of the said other
mixer-settler. In a similar manner the second conduit
means extends from a level at which disengaged heavier
medium collects in the lower chamber of the first
mixer-settler up through the zone of the lower baffle to
the mixing chamber of the second mixer-settler.

A preferred form of apparatus comprises an
elongate tank housing substantially rectangular in plan,
said housing comprising a floor, a pair of elongate side
walls and a pair of end walls, and said housing is further
internally divided by at least one transverse internal wall extending upwardly from said floor and between said side walls so as to form at least two box sections in said housing, each said box section corresponding to a respective mixer-settler. Preferably each said box section is square in plan.

In one preferred form of apparatus each mixer-settler is provided with a plurality of vertical partitions, each extending across a corner of the mixer-settler and defining vertically extending compartments at the respective corner adapted to provide a respective flow path for one of the media. Such partitions additionally serve to strengthen the structure. The compartments conveniently are triangular in section. In this apparatus the first and second mixer-settlers may share a common wall and said first conduit means may comprise a respective compartment adjacent said common wall. In this arrangement said weir means is preferably provided at said common wall between respective compartments of said first and second mixer-settlers. Conveniently said second conduit means comprises a pair of respective compartments, one in each of the first and second mixer-settlers, positioned adjacent the common wall and communicating one with another by way of a further weir means at said common wall. In an alternative arrangement the second conduit means comprises a compartment of the second mixer-settler adjacent the common wall and said common wall is provided with an opening providing communication between the lower settling chamber of the first mixer-settler and that compartment.

- 8 -

This opening may open from a compartment of the first mixer-settler, the vertical partition defining said compartment being provided with a further opening providing communication between the lower settling chamber of the first mixer-settler and that compartment.

In an alternative preferred form of apparatus, the first and second mixer-settlers share a common wall and said weir means is located in the flow path of lighter medium between the first and second mixer-settlers and has a length that is at least half the length of the common wall. In such a construction the second conduit means may comprise a riser connected to a weir box containing an outlet weir for heavier medium, over which the disengaged heavier medium from the first mixer-settler may overflow, and conduit means for receiving the heavier medium that overflows the outlet weir communicating with the mixing chamber of the second mixer-settler. Conveniently said weir box is aligned parallel to a wall of the corresponding mixer-settler other than the or a common wall. When the apparatus of the invention comprises a tank housing of the afore-mentioned type the weir box may be aligned parallel to a side wall of the housing. In an alternative arrangement the second conduit means comprises conduit means providing direct connection between the lower settling chamber of the first mixer-settler and the mixing chamber of the second mixer-settler. Preferably said directly connecting conduit means is provided with flow control means, such as a valve.

- 9 -

The apparatus of the invention may be arranged for counter-current flow of the media; in this case the said one mixer-settler is the second mixer-settler and the said other mixer-settler is the first mixer-settler. Alternatively it may be arranged for co-current flow, in which case the said one mixer-settler is the first mixer-settler and the said other mixer-settler is the second mixer-settler.

In use of the apparatus the organic hydrophobic medium may be lighter or heavier than the aqueous medium. In a typical multi-stage uranium extraction plant, for example, the organic extractant (e.g. a 5% by volume solution of "Alamine 336" in kerosene/2.5% by volume iso-decanol) will normally be the lighter phase. However, in other form of multi-stage extraction plant, the organic hydrophobic medium may be the heavier medium, particularly if the organic medium contains a solvent, such a chloroform, which has a specific gravity greater than 1.

An alternative form of apparatus according to the invention comprises a cluster of adjacent mixer-settler sections, each sharing a common wall with at least one other mixer-settler. In such a cluster arrangement the sections may be square in plan, or of another shape, for example triangular, pentagonal, or hexagonal in plan.

In order that the invention may be clearly understood and readily carried into effect some preferred embodiments thereof will now be described, by way of example only, with reference to the accompanying drawings, wherein:-

- 10 -

Figure 1 is a top plan view of a uranium solvent extraction plant comprising three extraction stages and a single scrub stage and constructed in accordance with the invention;

Figure 2 is a side view of the plant of Figure 1;

Figure 3 is a horizontal section (on the line A-A of Figure 4) at various levels through the plant of Figures 1 and 2;

Figure 4 is a vertical section through the plant of Figures 1 to 3 on the line B-B of Figure 3;

Figure 5 is an end view of the plant of Figures 1 to 4 in the direction of the arrow C of Figure 4;

Figure 6 is a view of the other end of the plant of Figures 1 to 5 looking in the direction of the arrow D of Figure 4;

Figure 7 is a vertical section through the plant of Figures 1 to 6 on the line E-E of Figure 4;

Figure 8 is a schematic flow sheet of the plant of Figures 1 to 7;

Figure 9 is a plan view, partly in horizontal section, of a second form of uranium solvent extraction plant comprising four extraction stages and constructed according to the invention, taken on the line F-F of Figure 10;

Figure 10 is a side view, partly in vertical section, of the plant of Figure 1, taken on the line G-G of Figure 1;

- 11 -

Figure 11 is an end view of the plant of Figures 1 and 2 seen in the direction of arrow H of Figure 10;

Figure 12 is a corresponding view of the other end of the plant of Figures 9 to 11, seen in the direction of the arrow I of Figure 10;

Figure 13 is a section on the line J-J of Figure 9;

- 12 -

Figure 14 is a view from above, partly in plan and partly in horizontal section, taken at different levels in different parts of the plant, of a uranium solvent extraction plant (with its top cover removed), which comprises four extraction stages and is constructed according to the invention, this view being taken on the line K-K of Figure 15;

Figure 15 is a vertical section of the plant of Figure 14, taken on the line L-L of Figure 14;

Figure 16 is a side view of the plant of Figures 14 and 15 seen in the direction of the arrow M of Figure 15;

Figure 17 is a section on the line N-N of Figure 14;

Figure 18 is a corresponding view to that of Figure 14 of a modified form of the plant of Figures 14 to 17;

Figure 19 is a side view of the plant of Figure 18 seen in the direction of the arrow O of Figure 18;

Figure 20 is a section on the line P-P of Figure 18; and

Figure 21 is a section on the line Q-Q of Figure 18.

- 13 -

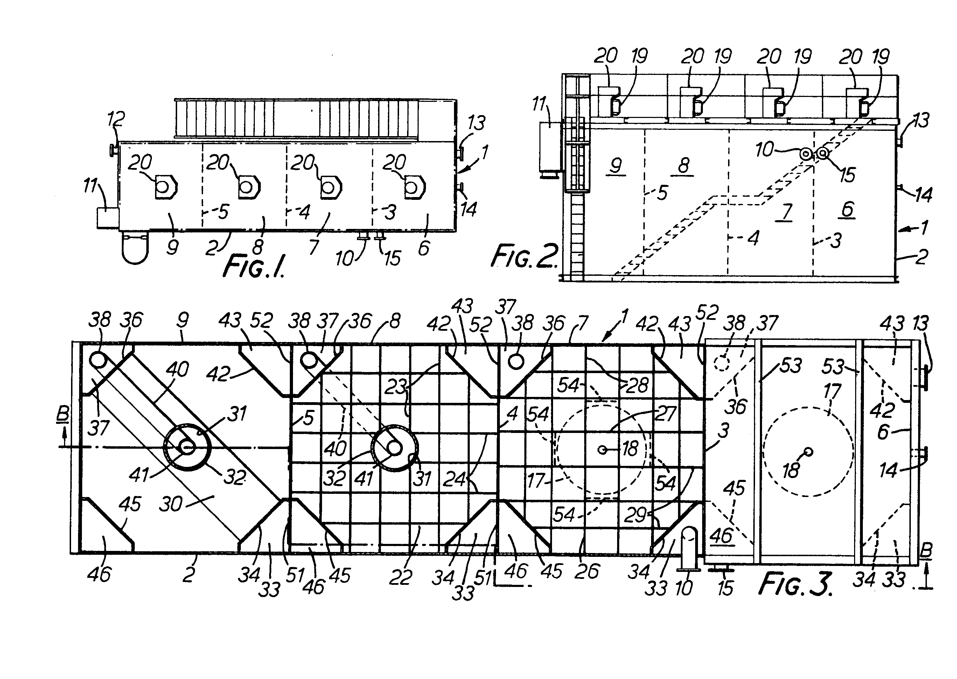

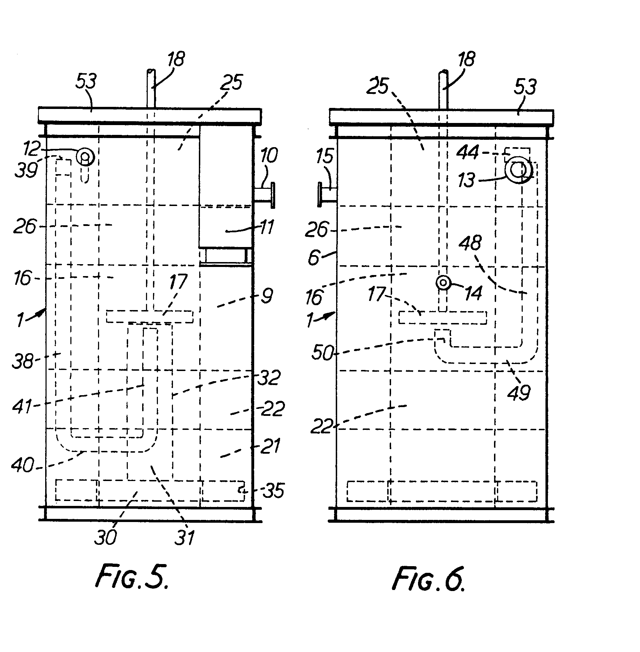

Referring to Figures 1 to 8, a uranium solvent extraction plant 1 comprises a tank 2 that is generally rectangular in plan, which is divided internally by three transverse walls 3, 4, 5 so as to provide separate mixer-settler sections comprising a scrub stage 6 and three extraction stages 7, 8, 9. A pregnant uranium leach liquor (e.g. a sulphuric acid leach solution) is supplied to the first extraction stage 7 by means of inlet pipe 10 and flows in turn through first extraction stage 7, second extraction stage 8 and third extraction stage 9. An aqueous raffinate is withdrawn from third extraction stage 9 through offtake 11. An organic extractant (e.g. a 5% by volume "Alamine 336" solution in kerosene/2.5% by volume iso-decanol) is supplied to plant 1 through inlet pipe 12 at approximately one tenth the rate of supply of the aqueous uranium leach liquor through inlet 10. This extractant passes in counter-current through the extraction stages from the third extraction stage 9 to the first extraction stage 7. The now uranium loaded organic liquor then passes on to scrub stage 6, in which it is scrubbed with water, and then finally leaves the plant via outlet 13. Scrub water is supplied to scrub stage 6 via inlet 14 and is removed via outlet 15.

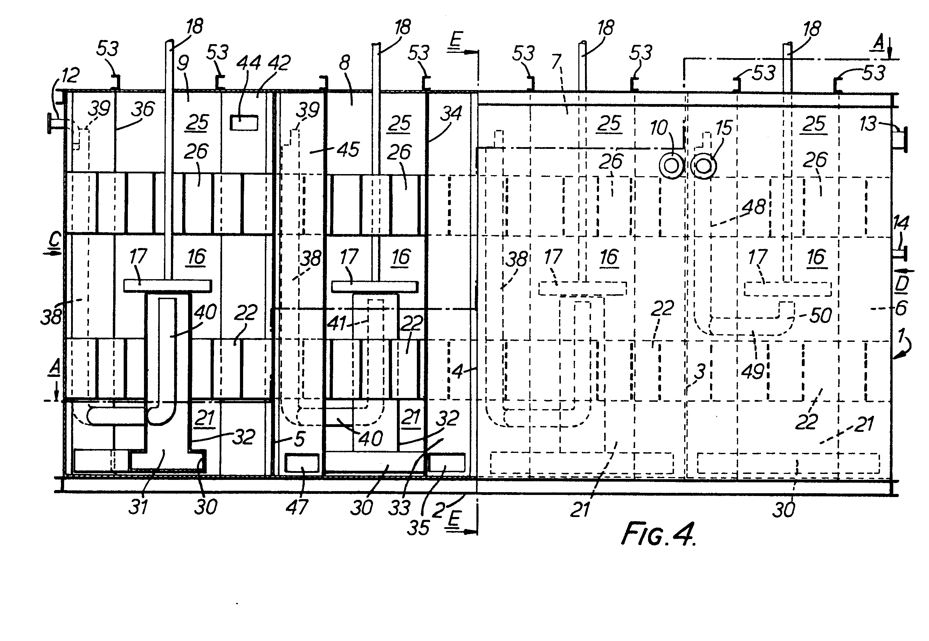

Each of the extraction stages 7, 8 and 9 is constructed as a mixer-settler and is similar in construction to the other extraction stages. Each mixer-settler of the extraction stages, as can perhaps best be seen from Figure 4, has a mixing chamber 16 with an impeller 17 therein mounted on a vertical shaft 18. A motor 19 (see Figure 2) is provided on top of each extraction stage for driving shaft 18 through suitable
reduction gearing (not shown) in housing 20. Beneath
mixing chamber 16 is a lower settling chamber 21; this is
separated from mixing chamber 16 by means of a lower
horizontal baffle 22 which extends across the extraction
stage. As can be seen from Figure 3, baffle 22 is of the
"egg box" type and consists of two sets of plates 23, 24
secured to one another at right angles. Above mixing
chamber 16 is an upper settling chamber 25 which is
separated therefrom by means of an upper horizontal baffle
26 generally similar in construction to that of lower
baffle 22. However, a central portion 27 of upper baffle
26 is removable, as will be described in greater detail
below, to permit access to, and servicing of, impeller 17.
As with lower baffle 22, upper baffle 26 comprises two
sets of parallel plates 28, 29 secured at right angles to
one another. Baffles 22 and 26 serve to provide a
plurality of pathways for liquid between the mixing
chamber 16 and the respective settling chamber 21 or 25.
The spacing between adjacent plates of the baffles 22 and
26 and the depth of these baffles are such that they serve
to eliminate from liquid entering the respective settling
chamber 21 or 25 from mixing chamber 16, most, if not all,
of the rotational movement about the axis of shaft 18
produced by impeller 17. In this way liquid enters the
settling chambers 21 and 25 in a substantially vertical
direction and conditions conducive to disengagement of the
phases are established in the settling chambers 21 and 25, despite turbulent mixing conditions in the adjacent mixing chamber 16.

Mounted diagonally across the bottom of each of the extraction stages is an inverted, generally U-section channel 30. This has an aperture 31 in its upper face and a draught tube 32 is mounted over this aperture 31 coaxially with shaft 18. At one end channel section 30 communicates with a downcomer 33 formed by a partition 34 welded across the corner of the mixer-settler. As can be seen from Figure 4, partition 34 is formed at its lower end with an aperture 35 through which aqueous phase can pass from downcomer 33 into channel 30.

At the corner of each extraction stage diagonally opposite from partition 34 is welded a similar partition 36 forming a compartment 37. A downcomer pipe 38 with an open upper end 39 passes down through compartment 37, bends at its lower end through $90^\circ$, passes horizontally as shown at 40 through settling chamber 21 and then passes through the wall of draught tube 32 before bending upwardly through $90^\circ$ so as to form a second draught tube 41 within draught tube 32 and coaxial therewith. For the avoidance of doubt, it should be noted that compartment 37 does not communicate directly with the interior of channel 30.

Across a third one of the corners of each extraction stage is welded a further partition 42 which forms a further compartment 43. Near the top of riser 43 is an aperture 44 (see Figure 4) through which disengaged organic phase can flow from upper settling chamber 25 into compartment 43.

- 16 -

A further partition 45 is welded across the remaining corner of each extraction stage so as to form a riser 46. An aperture 47 is provided in partition 45 in order to allow disengaged heavier phase to pass from lower settling chamber 21 into riser 46.

The construction of scrub stage 6 is similar to that of each of the extraction stages 7, 8 and 9 except that it lacks any draught tube 32 for the aqueous phase and has a modified draught tube for the organic phase. In scrub stage 6 like reference numerals are used to designate like parts to those appearing in extraction stages 7, 8 and 9. Instead of downcomer pipe 38, scrub stage 6 is provided with a vertical pipe 48 having a horizontal portion 49 and an upturned end 50 which is arranged coaxially with the shaft 18 for the impeller 17 of scrub stage 6 so as to form a draught tube for the uranium loaded organic phase to be scrubbed.

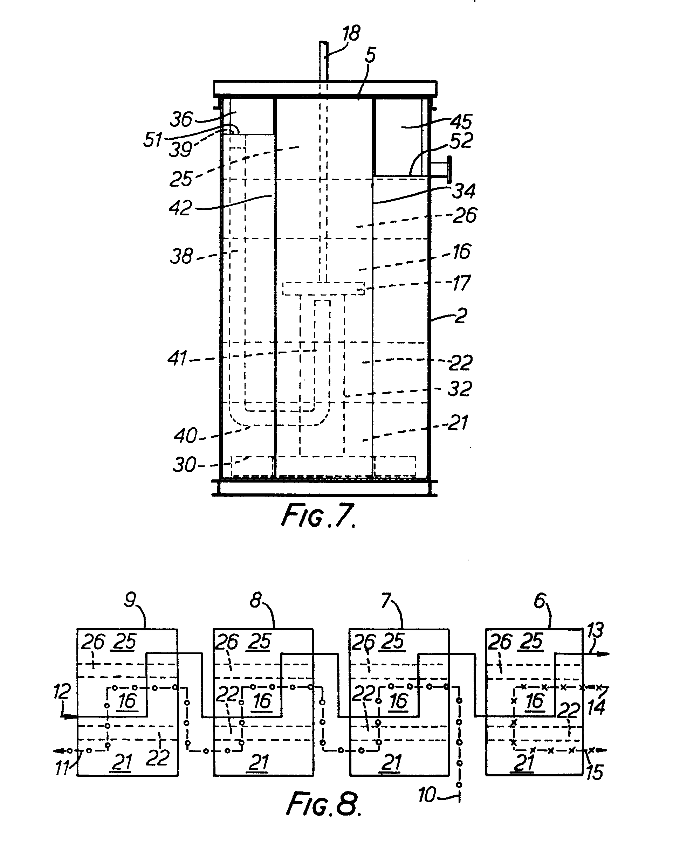

As can be seen from Figure 7, the wall between each pair of extraction stages, for example the wall 4, is cut away adjacent the longer walls of tank 2 so as to form a weir 51 between riser 46 of first extraction stage 7 and downcomer 33 of second extraction stage 8. Disengaged aqueous medium from first extraction stage 7 can thus flow from riser 46 of one extraction stage to downcomer 33, and hence to the mixing chamber 16, of the next extraction stage. Wall 4 is also cut away adjacent the other longer wall of tank 2 so as to form a weir 52 between compartment 43 of second extraction stage 8 and compartment 37 of first extraction stage 6. In this way disengaged organic medium can flow, in counter-current to the flow of aqueous medium, from the second extraction stage 8 to the first extraction stage 7. Similar weirs 51 and 52 are provided in wall 5. However, as illustrated, wall 3 lacks a weir 51 although having a weir 52.

Figure 8 illustrates diagrammatically the flow of the media through the plant 1; the continuous line (————————) indicates the path of organic extractant, the line ( - o - o - o -) shows the path of aqueous sulphuric acid leach liquor and the line ( - x - x - x -) shows the path of scrub water. For the sake of clarity impellers and draught tubes and the detailed construction of the downcomers and risers have been omitted from Figure 8, whilst the various stages have been shown spaced one from another solely to improve the intelligibility of the diagram; in practice adjacent stages share common walls 3, 4 and 5 as indicated in Figures 1 to 7 above.

Each of the drive units, consisting of motor 19 and gear housing 20, is conveniently mounted on a horizontal plate (not shown) which is bolted by means of, for example, 4 bolts (also not shown) to cross members 53. When it is required to gain access to an impeller 17, it is a simple matter to loosen these bolts and lift off the whole drive unit comprising motor 19, gear housing 20, drive shaft 18 and impeller 17. As this drive unit is lifted the removable central portion 27 is caught up by impeller 17 and is removed from the plant 1 together with the drive unit. As indicated at 54 in Figure 3, small flanges can be provided on the underside of upper baffle 26 to support central portion 27 during normal operation of the plant 1.

- 18 -

In operation of the plant 1, pregnant uranium leach liquor enters first extraction stage 7 through inlet 10 and fills downcomer 33 of first extraction stage 7. It then flows through aperture 35 into channel 30 and up through aperture 31 and draught tube 32 into the "eye" of impeller 17 in mixing chamber 16. Organic phase enters compartment 37 of first extraction stage by passage over weir 51 from compartment 43 of second extraction stage 8, passes down through downcomer pipe 38 through its open upper end 39, through horizontal portion 40, up draught tube 41 and into mixing chamber 16. Impeller 17 serves to disperse the phases one in the other so as to form a so-called "primary dispersion", that is to say a dispersion of globules of one phase in the other of a size such that, on standing under gravity, substantially complete disengagement of the phases occurs. Typically such globules are at least about 100 micrometres in diameter. The presence of "secondary dispersion"-sized globules, i.e. globules which will not disengage on standing under gravity, is to be avoided. "Secondary dispersion"-sized globules are usually about 20 micrometres in diameter or less.

Dispersion passes through baffles 22 and 26 both downwardly and upwardly from mixing chamber 16. Disengagement of the phases occurs in the baffles and/or in the settling chambers 21 and 25. Disengaged heavier phase (i.e. aqueous phase) flows back from baffle 26 into mixing chamber 16, whilst disengaged lighter phase (i.e. kerosene phase) flows back from baffle 22 into mixing chamber 16.

Disengaged kerosene phase collects in upper settling chamber 25 and flows out via aperture 44 into compartment 43 and thence over weir 51 into compartment 37 of scrub stage 6. Disengaged aqueous phase collects in lower settling chamber 21 and passes through aperture 47 into riser 46 and thence over weir 52 into downcomer 33 of second extraction stage 8.

The flow pattern through second and third extraction stages 8 and 9 is similar.

As illustrated there is no weir corresponding to weir 52 between first extraction stage 7 and scrub stage 6. If desired, however, the plant 1 can be modified by providing such a weir and by omitting outlet 15; in this case the scrub water flows from riser 46 of scrub stage 6 over the corresponding weir into downcomer 33 of first extraction stage 7, therein to commingle with the pregnant leach liquor entering through inlet 10.

As illustrated, the position of the open end 39 of each pipe 38 is fixed. Adjustable sleeves may be provided, if desired, on pipes 38 to permit adjustment of the level of the upper ends 39.

As illustrated in Figure 4 the upper ends 39 of pipes 38 and the upper end of pipe 48 are each cut away at one side; this design assists in preventing formation of air locks in pipes 38 and 48.

If the impellers 17 are stopped, but feed of the liquors is continued, a clear static interface between the phases will be established within each of the extraction and scrub stages. The height of this static interface will be determined by the relative heights of the weirs 51
and 52 and by the densities of the phases. This interface
lies in the mixing chamber 16 and its height therein
essentially determines the instantaneous volume ratio of
the phases in the mixing chamber 16 during operation of
the plant under design flow conditions, whatever the feed
rate ratio of the phases to the plant 1 may be. This
instantaneous volume ratio of the phases substantially
corresponds to the phase ratio of the dispersion formed.
For optimum operation of the plant 1 this phase ratio
should be chosen so as to promote mass transfer between
the phases. Preferably the phase ratio lies in the range
of from about 1:5 to about 5:1 by volume. Usually it will
be preferred to operate at a phase ratio of from about 2:1
to about 1:2, e.g. at about 1:1, by volume since this
ratio favours mass transfer and minimises the risk of
formation of a "secondary dispersion". It is preferred
that the impeller 17 is positioned at about the level of
the static interface between the phases.

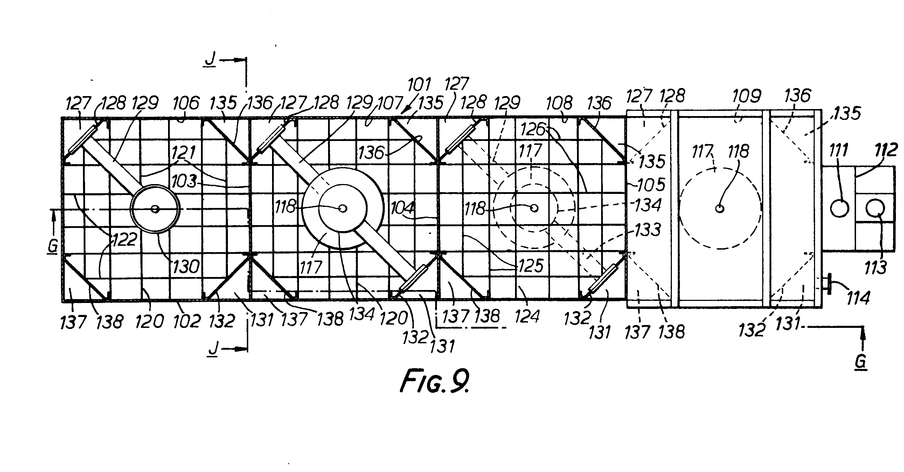

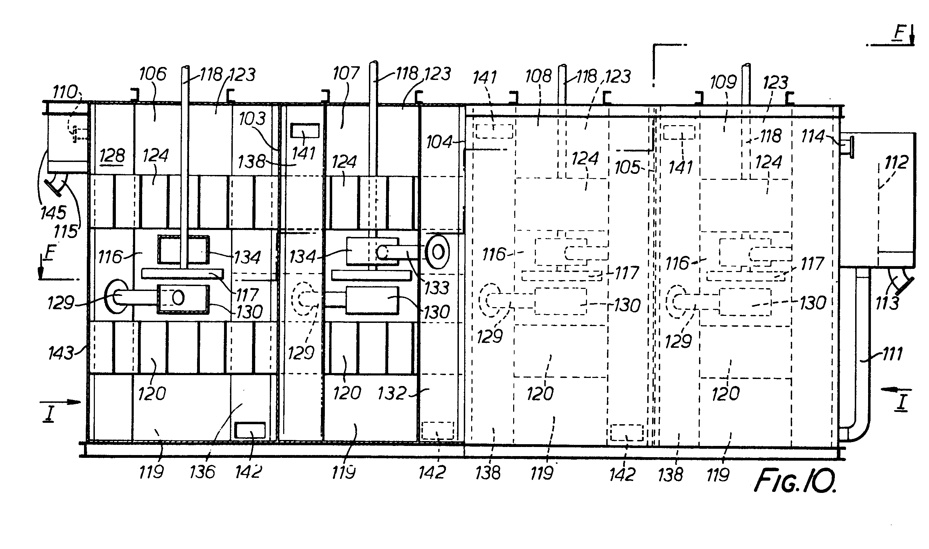

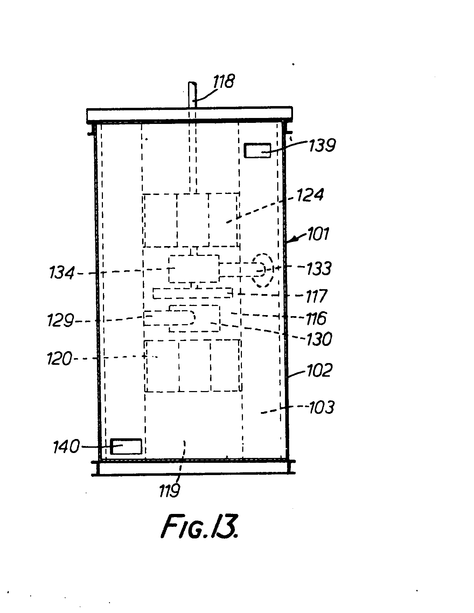

In the plant of Figures 1 to 8 the aqueous and
organic media flow directly from one mixer-settler to the
next over respective weirs formed between adjacent
mixer-settlers by the common wall thereof. The plant of
Figures 9 to 13 has, in place of a weir for the heavier
medium of the two, a direct communication between adjacent
mixer-settlers for disengaged heavier medium by way of an
underflow arrangement. This has the advantage that the
impellers or other forms of mixing device provided in the
mixing chambers for forming the desired dispersion of the media one within the other do not have to provide the necessary hydraulic head to make the disengaged heavier medium pass over its respective weir to the adjacent mixer-settler. Hence the power requirement for the impellers or other mixing devices is reduced in the plant of Figures 9 to 13.

Referring to Figures 9 to 13, a uranium solvent extraction plant 101 comprises a tank 102 that is generally rectangular in plan, which is divided internally by three transverse walls 103, 104, 105 so as to provide four separate mixer-settler sections each comprising one of the four extraction stages 106, 107, 108, 109. A pregnant uranium leach liquor (e.g. a sulphuric acid leach solution) is supplied to the first extraction stage 106 by means of inlet pipe 110 and flows in turn through the four extraction stages 106, 107, 108, 109. An aqueous raffinate is withdrawn from fourth extraction stage 109 through offtake 111 and overflows weir 112 to exit the plant 101 via outlet pipe 113. An organic extractant (e.g. a 5% by volume "Alamine 336" solution in kerosene/2.5% by volume iso-decanol) is supplied to plant 101 through inlet pipe 114 at approximately one tenth the rate of supply of the aqueous uranium leach liquor through inlet 110. This extractant passes in counter-current to the aqueous stream through the four extraction stages in the order 109, 108, 107, 106 and the loaded extractant exits plant 101 via offtake pipe 115.

Each of the four extraction stages 106, 107, 108 and 109 is constructed as a mixer-settler and is similar in construction to the other extraction stages. Each has
a mixing chamber 116 with an impeller 117 mounted therein
on a vertical shaft 118. A motor (not shown) is provided
on top of each extraction stage for driving the respective
shaft 118 through suitable reduction gearing (not shown).

Beneath mixing chamber 116 in each extraction
stage is a lower settling chamber 119; this is separated
from mixing chamber 116 by means of a lower baffle 120
which extends horizontally across the extraction stage.
As can be seen from Figure 9, baffle 120 is of the "egg
box" type and consists of two sets of plates 121, 122
secured to one another at right angles. Above mixing
chamber 116 is an upper settling chamber 123 which is
separated therefrom by means of an upper baffle 124
generally similar in construction to that of lower baffle
120. As with lower baffle 120, upper baffle 124
comprises two sets of parallel plates 125, 126 secured at
right angles to one another. Baffles 120 and 124 serve to
provide a plurality of pathways for liquid between the
mixing chamber 116 and the respective settling chamber 119
or 123. The spacing between adjacent plates of the
baffles 120 and 124 and the depth of these baffles are
such that they serve to eliminate from liquid entering the
respective settling chamber 119 or 123 from mixing chamber
116, most, if not all, of the rotational movement about
the axis of shaft 118 produced by impeller 117. In this
way liquid enters the settling chambers 119 and 123 in a
substantially vertical direction and conditions conducive to disengagement of the phases are established in the settling chambers 119 and 123 despite turbulent mixing conditions in the adjacent mixing chamber 116.

In one corner of each mixer-settler section is formed a first compartment 127 of right-angled triangular section, the hypotenuse of which is formed by partition 128. A horizontal pipe 129 is mounted to partition 128 so as to communicate with conduit 127. At its free end pipe 129 debouches into a distributor box 130 having an open upper face and disposed below and adjacent impeller 117.

In the corner opposite to compartment 127 is formed a second compartment 131, also of right-angled, triangular section, whose hypotenuse is formed by partition 132. This latter compartment is arranged to feed a further horizontal pipe 133 which debouches into an upper distributor box 134. Distributor box 134 has an open lower face and is disposed above and adjacent impeller 117; shaft 118 passes through its upper face.

In a third one of the corners of each mixer-settler stage is formed a further triangular section compartment 135. The hypotenuse to this triangular section is formed by vertical partition 136. In a similar way the remaining corner of each mixer-settler stage has another compartment 137, the hypotenuse to which is formed by vertical partition 138.

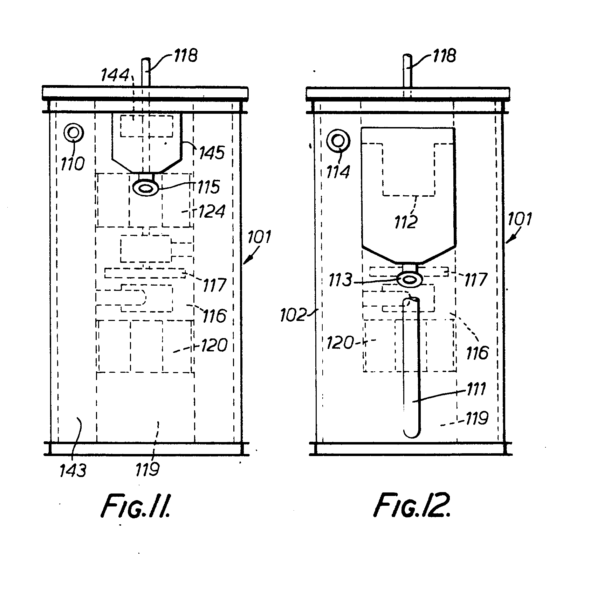

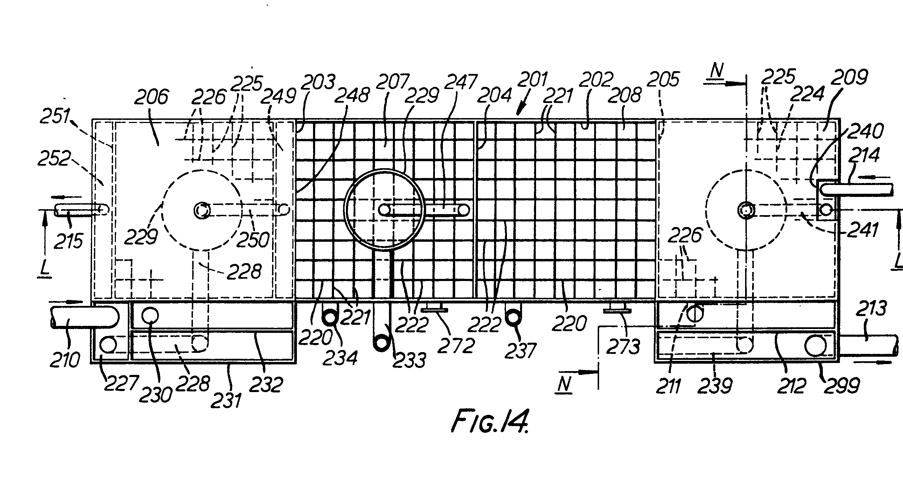

As can be seen from Figure 13, the wall between each adjacent pair of mixer-settler sections, for example the wall 103, is provided with a pair of apertures 139, 140. An aperture 141, corresponding to aperture 139 is

- 24 -

formed in the partition 138 of each of extraction stages 107. 108. 109. In the partition 136 of each of extraction stages 106, 107, 108 there is an aperture 142 corresponding to aperture 140. The end wall 143 of extraction stage 106 has an aperture 144 (see Figure 11) which provides communication between upper compartment 123 of first extraction stage 106 and an overflow catchpot 145 to which offtake pipe 115 is connected. The lower edge of aperture 144 lies at the same level as the lower edges of each of the apertures 139 and 141.

In operation of the plant, pregant uranium leach liquor enters first extraction stage 106 through inlet 110 and passes into a vertical conduit formed by compartment 127 of first extraction stage 106. It then flows through pipe 129 and distribution box 130 into the "eye" of impeller 117 in mixing chamber 116. Organic phase enters compartment 131 of first extraction stage 106 by passage over the weir, formed by the lower edge of aperture 139, from compartment 137 of second extraction stage 108, passes down through the vertical conduit formed by compartment 131 of first extraction stage 106, through pipe 133 and distribution box 134 and into the "eye" of impeller 117. Impeller 117 serves to disperse the phases one in the other so as to form a so-called "primary dispersion".

Dispersion passes through baffles 120 and 124 both downwardly and upwardly from mixing chamber 116. Disengagement of the phases occurs in the baffles and/or in the settling chambers 119 and 123. Disengaged heavier phase (i.e. aqueous phase) flows back from baffle 124 into mixing chamber 116, whilst disengaged lighter phase (i.e.

kerosene phase) flows back from baffle 120 into mixing
chamber 116.

Disengaged kerosene phase collects in upper
settling chamber 119 and flows out over the weir formed by
the lower edge of aperture 144 and thence to offtake pipe
115. Disengaged aqueous phase collects in lower settling
chamber 119 and passes through aperture 142 into
compartment 135 and thence through aperture 140 into
compartment 127 of second extraction stage 107.

In second extraction stage 107 the aqueous phase
flows in compartment 127 to pipe 129 and thence via
distribution box 130 into the "eye" of impeller 117. The
organic phase enters from third extraction stage 108 via
aperture 139 in transverse wall 104, flows down
compartment 131 and thence through pipe 133 and
distribution box 134 to the impeller 117. Dispersion
formation and disengagement takes place as described above
in relation to first extraction stage 106. Disengaged
organic phase flows from upper chamber 123 through
aperture 141 into compartment 137 and then overflows
through aperture 139 into compartment 131 of the first
extraction stage 106. Disengaged aqueous phase exits
lower chamber 119 via apertures 142 and 140 to pass on to
third extraction stage 107.

The flow pattern through third extraction stage
108 is similar to that in second extraction stage 107.

In fourth extraction stage 109 the organic phase
enters compartment 131 via inlet pipe 114. Disengaged
aqueous phase (raffinate) exits lower chamber 119 via
offtake 111. Otherwise the flow paths of the aqueous and organic phases are as described for the earlier extraction stages.

As with the plant 1 of Figures 1 to 8, the static interface (with the impellers 117 stopped but with the liquors continuing to flow through the plant 101 at flow rates within the design capacity) is preferably selected so as to produce a dispersion of a phase ratio, e.g. about 1:1, that promotes mass transfer between the phases and minimises the risk of "secondary dispersion" formation.

As illustrated plants 1 and 101 are each arranged for counter-current flow of the two media between extraction stages. To operate the plant 1 under a co-current regime requires some modification. In this case downcomer pipe 38 is repositioned to run from compartment 43 to draught tube 41, aperture 44 is blanked off and an aperture similar to aperture 44 is formed in partition 36. Former inlet 12 now becomes the outlet for the organic liquor and a new inlet must be provided for lean organic liquor to compartment 43 of first extraction stage 7. Scrub stage 6 can be dispensed with or can be repositioned to receive organic liquid from compartment 37 of third extraction stage 9. To operate the plant 101 under a co-current regime also requires some modification. In this case pipe 133 is repositioned to run from compartment 137, aperture 141 is blanked off and an aperture similar to aperture 141 is formed in partition 132. Former inlet 114 now becomes the outlet for the organic liquor and a new inlet must be proivided for lean organic liquor to compartment 137 of first extraction stage 106. Outlet catchpot 145 can be dispensed with.

It is an advantage of each of plants 1 and 101 that no exterior pipework is necessary. Furthermore since the plant is compact in construction it can be fabricated off site and transported as a unit to the plant site. Provided that the outside walls of tank 2 or 102 are leak-free, the presence of minor leaks between stages or from the various compartments within the individual stages is relatively unimportant and will not detract markedly from efficient operation of the plant. The internal partitions 34, 36, 42 and 45 or 128, 132, 136 and 138, besides providing the compartments at the corners of each extraction stage, also serve to strengthen the structure.

- 28 -

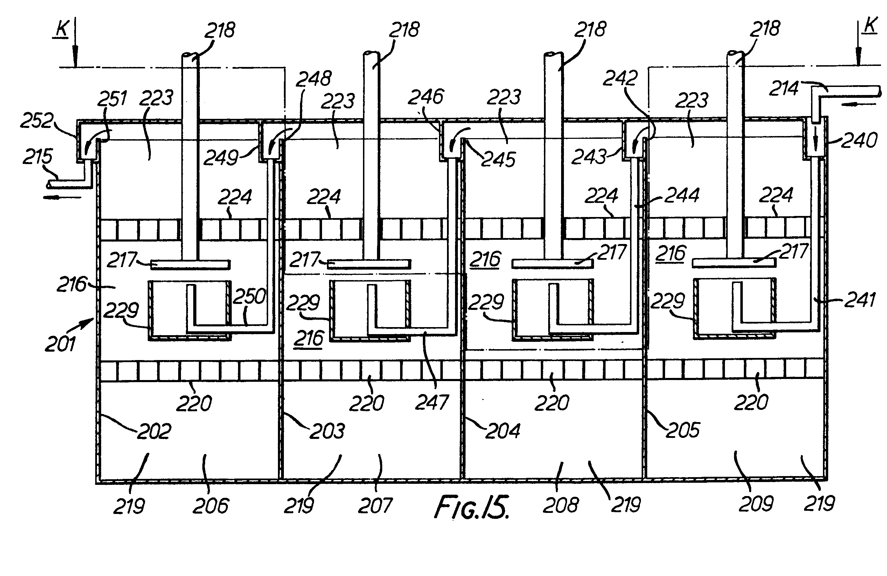

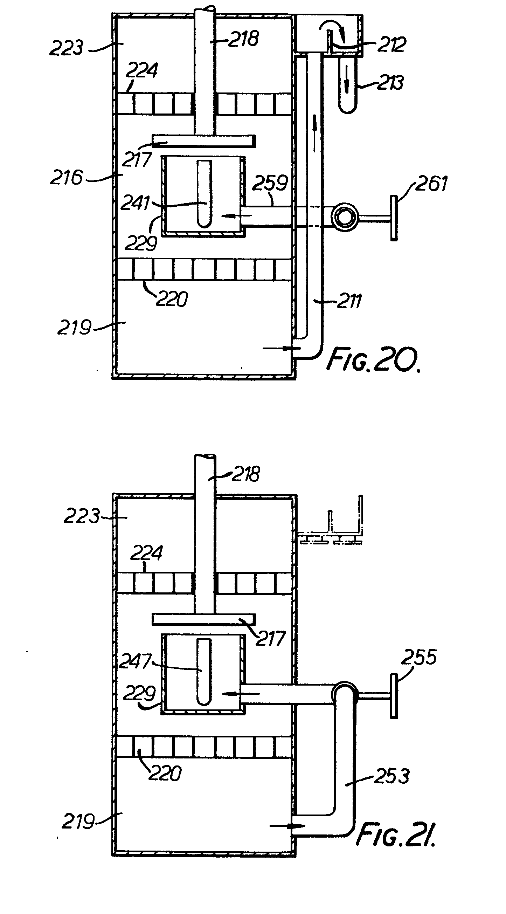

Referring to Figures 14 to 21 of the drawings, a uranium solvent extraction plant 201 comprises a tank 202 that is generally rectangular in plane, which is divided internally by three transverse walls 203, 204, 205 so as to provide four separate mixer-settler sections each comprising one of the four extraction stages 206, 207, 208, 209. A pregnant uranium leach liquor (e.g. a sulphuric acid leach solution) is supplied to the first extraction stage 206 by means of inlet pipe 210 and flows in turn through the four extraction stages 206, 207, 208, 209. An aqueous raffinate is withdrawn from fourth extraction stage 209 through offtake 211 and overflows weir 212 of weir box 299 to exit the plant 201 via outlet pipe 213. An organic extractant (e.g. a 5% by volume "Alamine 336" solution in kerosene/2.5% by volume iso-decanol) is supplied to plant 201 through inlet pipe 214 at approximately one tenth the rate of supply of the aqueous uranium leach liquor through inlet 210. This extractant passes in counter-current to the aqueous stream through the four extraction stages in the order 209, 208, 207, 206 and the loaded extractant exits plant 201 via offtake pipe 215.

Each of the four extraction stages 206, 207, 208 and 209 is constructed as a mixer-settler and is similar in construction to the other extraction stages. Each has a mixing chamber 216 with an impeller 217 mounted therein on a vertical shaft 218. A motor (not shown) is provided on top of each extraction stage for driving the respective shaft 218 through suitable reduction gearing (not shown).

Beneath mixing chamber 216 in each extraction stage is a lower settling chamber 219; this is separated from mixing chamber 216 by means of a lower baffle 220 which extends horizontally across the extraction stage. As can be seen from Figure 14, baffle 220 is of the "egg box" type and consists of two sets of plates 221, 222 secured to one another at right angles. Above mixing chamber 216 is an upper settling chamber 223 which is separated therefrom by means of an upper baffle 224 generally similar in construction to that of lower baffle 220. As with lower baffle 220, upper baffle 224 comprises two sets of parallel plates 225, 226 secured at right angles to one another. Baffles 220 and 224 serve to provide a plurality of pathways for liquid between the mixing chamber 216 and the respective settling chamber 219 or 223. The spacing between adjacent plates of the baffles 220 and 224 and the depth of these baffles are such that they serve to eliminate from liquid entering the respective settling chamber 219 or 223 from mixing chamber 216, most, if not all, of the rotational movement about the axis of shaft 218 produced by impeller 217. In this way liquid enters the settling chambers 219 and 223 in a substantially vertical direction and conditions conducive to disengagement of the phases are established in the settling chambers 219 and 223 despite turbulent mixing conditions in the adjacent mixing chamber 216.

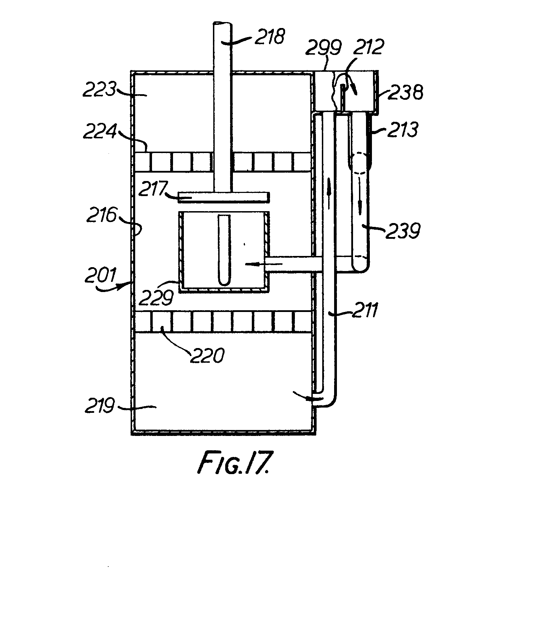

Inlet pipe 210 for the pregnant uranium leach liquor empties into a feeder box 227 to which is connected a pipe 228. Pipe 228 leads in turn to an open-topped distributor drum 229 mounted below impeller 217. Aqueous liquor leaves lower settling chamber 219 of first extraction stage 206 through a riser 230 and passes into a weir box 231 mounted on the side of first extraction stage 206, overflows a weir 232 (which is similar to weir 212 shown in Figure 17), and exits weir box 231 through a pipe 233 which leads to the distribution drum 229 of second extraction stage 207. Aqueous liquor leaves the lower settling chamber 219 of second extraction stage 207 through pipe 234 and passes to a weir box 235, which is similar to, but somewhat longer than, weir box 231 and is fitted with a weir (not shown) similar to weirs 212 and 232. It then overflows the weir of weir box 235 and passes through pipe 236 to the distributor drum 229 of third extraction stage 208. In a similar way aqueous liquor from lower settling chamber 219 of third extraction stage 208 passes through pipe 237 to weir box 238 (which is identical to the weir box 235 and the weir box 299 of the fourth extraction stage 209), overflows the weir of weir box 238, and passes via pipe 239 to the distributor drum 229 of the fourth extraction stage 209. From fourth extraction stage 209 the raffinate is withdrawn from the corresponding lower settling chamber 219 by means of offtake pipe 211, weir 212 and outlet pipe 213 as already described.

The lean organic liquor enters the plant 201 through line 214 which empties into a feeder box 240; from here the organic liquor passes down tube 241 and is sucked up into the eye of the impeller 217 of the fourth extraction stage (see Figure 15). From upper settling chamber 223 of fourth extraction stage 209 organic liquor can overflow a weir 242 to a feeder box 243 which extends across the width of the third extraction stage 208 and which supplies a tube 244. In a similar way organic liquor can overflow over a weir 245 from third extraction stage 208 to a feeder box 246 extending across the width of second extraction stage 207 which supplies a tube 247 leading to the eye of the corresponding impeller 217. Again, organic liquor can overflow from second extraction stage 207 over a weir 248 to a feeder box 249. As with feeder boxes 243 and 246 and weirs 242 and 245, weir 248 and feeder box 249 each extend the full width of the plant 201. From feeder box 249 the organic liquor passes on through tube 250. Finally, loaded organic liquor exits the upper settling chamber 223 of the first extraction stage 206 by overflowing weir 251 to collection box 252, both of which extend the full width of the plant. From collection box 252 the loaded organic liquor flows out of the plant 201 through outlet pipe 215.

In operation of the plant, pregnant uranium leach liquor enters first extraction stage 206 through inlet 210 and passes via feeder box 227, pipe 228 and distributor drum 229 into the "eye" of impeller 217 in mixing chamber 216. Organic phase enters feeder box 249 of first extraction stage 206 by passage over the weir 248, passes down through the tube 250 and into the "eye" of impeller 217. Impeller 217 serves to disperse the phases one in the other so as to form a so-called "primary dispersion", that is to say a dispersion of globules of one phase in the other of a size such that, on standing under gravity, substantially complete disengagement of the phases occurs. Typically such globules are at least about 100 micrometres in diameter. The presence of "secondary dispersion"-sized globules, i.e. globules which will not disengage on standing under gravity, is to be avoided. "Secondary dispersion"-sized globules are usually about 20 micrometres in diameter or less.

Dispersion passes through baffles 220 and 224 both downwardly and upwardly from mixing chamber 216. Disengagement of the phases occurs in the baffles and/or in the settling chambers 219 and 223. Disengaged heavier phase (i.e. aqueous phase) flows back from baffle 224 into mixing chamber 216, whilst disengaged lighter phase (i.e. kerosene phase) flows back from baffle 220 into mixing chamber 216.

Disengaged kerosene phase collects in upper settling chamber 219 and flows out over weir 251 into collection box 252 and thence to outlet pipe 215. Disengaged aqueous phase collects in lower settling chamber 219 and passes through pipe 230 into weir box 231, over the weir 232 and then through pipe 233 into the distributor drum 229 of second extraction stage 107.

In second extraction stage 207 the aqueous phase is drawn into the "eye" of impeller 217. The organic phase overflows from third extraction stage 208 over weir 245 into feeder box 246, and flows down tube 247 and thence through distributor drum 229 to the impeller 217. Dispersion formation and disengagement takes place as described above in relation to first extraction stage 206
Disengaged organic phase from upper chamber 223 overflows
weir 251 into feeder box 248. Disengaged aqueous phase
exits lower chamber 219 via pipe 234 to pass on to third
extraction stage 107 by way of weir box 235 and pipe 236.

The flow pattern through third extraction stage
208 is similar to that in second extraction stage 207.

In fourth extraction stage 209 the organic phase
enters feeder box 240 via inlet pipe 214. Disengaged
aqueous phase (raffinate) exits lower chamber 219 via
offtake 211, weir box 299 and outlet pipe 213. Otherwise
the flow paths of the aqueous and organic phases are as
described for the earlier extraction stages.

If the impellers 217 are stopped, but feed of
the liquors is continued, a clear static interface between
the phases will be established within each of the
extraction stages. The height of this static interface in
each stage will be determined by the relative heights of
the weirs over which the phases overflow to leave that
stage, as well as by the densities of the phases. This
interface lies in the mixing chamber 216 and its height
therein essentially determines the instantaneous volume
ratio of the phases in the mixing chamber 216 during
operation of the plant 201 under design flow conditions,
whatever the feed rate ratio of the phases thereto may be.
This instantaneous volume ratio of the phases
substantially corresponds to the phase ratio of the
dispersion formed. For optimum operation of the plant 201
this phase ratio should be chosen so as to promote mass

- 34 -

transfer between the phases. Preferably the phase ratio lies in the range of from about 1:5 to about 5:1 by volume. Usually it will be preferred to operate at a phase ratio of from about 2:1 to about 1:2, e.g. at about 1:1, by volume since this ratio favours mass transfer and minimises the risk of formation of a "secondary dispersion". It is preferred that the impeller 217 is positioned at about the level of the static interface between the phases.

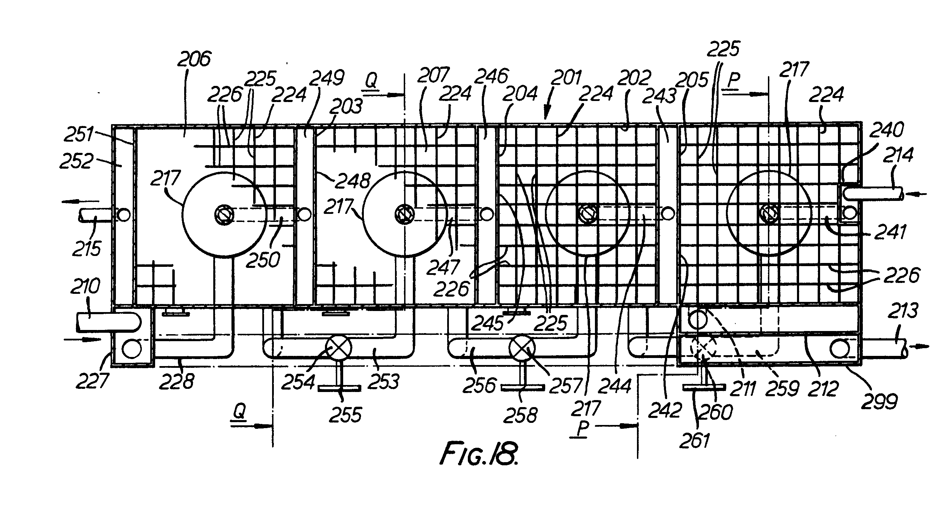

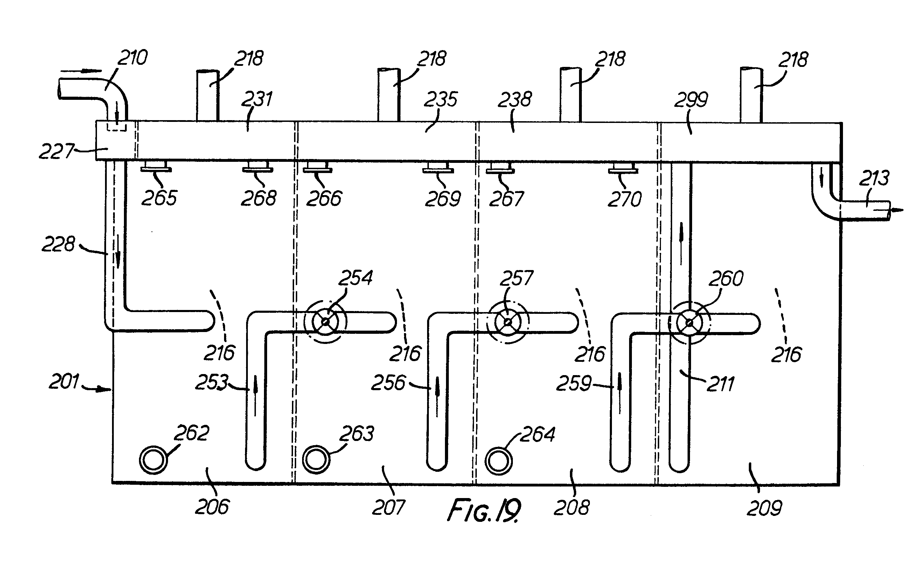

The plant of Figures 18 to 21 is similar to that of Figures 14 to 17, except that the aqueous liquor passes directly between the stages and the weir boxes 231, 235 and 238 are not used. In Figures 14 to 21 the same reference numerals have been used to designate like parts in the two embodiments. Except where noted below the two forms of apparatus are otherwise essentially identical. In the modified plant of Figures 18 to 21 pipes 230 and 233 are replaced by pipe 253 which is fitted with an adjustable valve 254 operable by means of a handwheel 255. (For the sake of clarity handwheel 255 and the other handwheels to be described below are omitted from Figure 19). In a similar fashion pipes 234 and 236 of the plant of Figures 14 to 17 are replaced by pipe 256 which is fitted with an adjustable valve 257 having a handwheel 258. Likewise pipes 237 and 239 are replaced by pipe 259 in which is located valve 260 having handwheel 261. Each of pipes 253, 256 and 259 leads from the lower settling chamber 219 of one stage to the corresponding distributor drum 229 of the next stage. In the plant of Figures 18 to 21 the flanged outlets 262, 263 and 264 which, in the plant of Figures 14 to 17 serve for connection of the pipes 230, 234 and 237 respectively are blanked off. Also visible in Figure 19 are the flanged connections 265, 266 and 267 for the upper ends of pipes 230, 234 and 237 respectively and the flanged connections 268, 269 and 270 for the upper ends of pipes 233, 236 and 239 respectively of the plant of Figures 14 to 17.

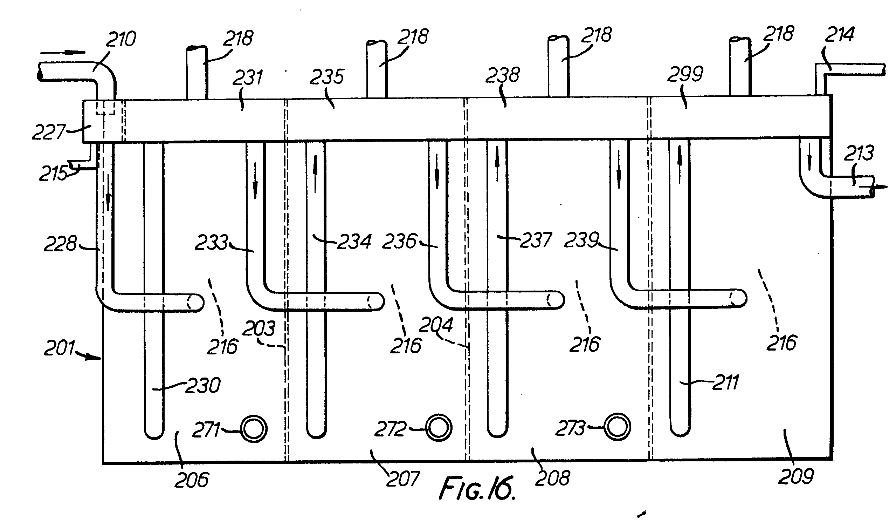

In Figures 14 and 16 reference numerals 271, 273 and 273 represent blanked off flanged connections for the ends of pipes 253, 256 and 259 respectively of the plant of Figures 18 to 21.

The plants of Figures 14 to 17 and 18 to 21 are designed for counter-current flow of the two media between phases. They can be modified for co-current flow by maintaining the aqueous liquor flow path as shown and by providing a "mirror image" flow path for the organic liquor so that the organic inlet 214 and feeder box 240 are positioned at the left-hand end (as illustrated in Figure 14) of first extraction stage 206 and the organic outlet pipe 215 and collection box 252 are positioned at the right-hand end of fourth extraction stage 209, with the corresponding intermediate tubes 241, 244, 247 and 250, weirs 242, 245, 248 and 251 and feeder boxes 243, 246 and 249 each appearing in a "mirror image" position.

In view of the comparative length of the weirs in the plants of Figures 14 to 17 and 18 to 21, the impellers 217 can be run at a comparatively low tip speed since it is not necessary to develop a large hydraulic head in order to cause the media to flow from one mixer-settler to the next.

- 36 -

In the illustrated embodiments, the various weirs are shown fixed. It will usually be preferred, however, to make these weirs adjustable, i.e. by providing vertically adjustable plates whose upper edges form the respective weirs. V-notches may be provided, if desired, in these weirs for better flow control.

Similarly the illustrated "egg box" type baffles can be replaced by other forms of baffle, e.g. inclined plates or coalescer pads such as pads of "D.C. KnitMesh (the word "KnitMesh" is a trade mark of KnitMesh Limited of Clements House, Station Approach,. South Croydon, CR2 OYY; "D.C. KnitMesh" is a dual filament knitted mesh fabric knitted from side-by-side filaments of, for example, stainless steel and polypropylene.)

In each of the illustrated embodiments the various stages of the plant may be operated so that the dispersion is of the organic-in-aqueous (O/A) type or of the aqueous-in-organic (A/O) type. Some of the stages may be operated with one type of dispersion and some with the other or they may all be operated so that the same type of dispersion is formed in each. Usually it will be preferred to operate each stage under conditions such that the dispersed medium is the one supplied at the lower feed rate to that stage, i.e. in the case illustrated with an O/A-type dispersion in each stage. The reason for this will be discussed in more detail below.

In use of each of the illustrated forms of plant for uranium extraction the pregnant aqueous sulphuric acid leach liquor is supplied at a greater rate than the organic extractant. Typically the aqueous:organic feed rate ratio is about 10:1 by volume. The instantaneous volume ratio of the phases in the mixing chambers ( and hence the phase ratio of the dispersion) is, however, adjusted to be 1:1 by volume.  A 1:1 by volume ratio dispersion thus flows both upwardly and downardly into the upper and lower baffles.  Thus, at a 10:1 by volume aqueous:organic feed ratio, for every 10 volumes of aqueous leach liquor supplied to the mixing chamber, 20 volumes of dispersion flow downward into the lower baffle, whilst 1 volume of organic extractant is supplied to the mixing chamber and 2 volumes of dispersion pass into the upper baffle.  Of the 20 volumes of dispersion flowing into the lower baffle, 10 volumes of aqueous liquor disengage whilst 10 volumes of organic extractant, either wholly or partially disengaged, return to the mixing chamber.  By operating under aqueous continuous conditions, i.e. with an O/A type dispersion in the mixing chamber, it is not necessary that the dispersed organic extractant should disengage completely before flowing back up into the mixing chamber from the lower baffle.  Hence the organic extractant may return to the mixing chamber from the lower baffle still in droplet form, albeit as somewhat enlarged droplets.  Of the 2 volumes of O/A type dispersion flowing into the upper baffle, 1 volume of organic extractant is coalesced completely whilst 1 volume of aqueous liquor flows back into the mixing chamber. Hence it is not necessary that the cross-sectional area of the lower baffle and the lower settling chamber provides sufficient settling area for complete disengagement of the 20 volumes of dispersion flowing into the lower baffle.

Complete disengagement is only necessary for the dispersion flowing into the upper baffle. This means that the settler area can be greatly reduced compared with that of a conventional mixer settler operating at a 10:1 by volume aqueous:organic ratio and a 1:1 by volume mixing ratio with external recycle of organic extractant.

In effect the mixer-settler stages of the illustrated forms of apparatus each incorporate an automatic internal recycle of organic extractant (or whichever phase happens to be the one supplied at the lower rate). Besides requiring a smaller settling area than conventional apparatus (and hence potentially lower inventories of organic solvent and extractant chemical and potentially less hold-up of valuable materials in the plant) there is no need for an external recycle loop.

Although a 10:1 aqueous:organic feed rate ratio to the plants has been mentioned above, the relative flow rates of the two phases to the mixing chambers can be adjusted as desired within the design limits of the plant. Thus the flow rate ratio of the phases to the mixing chamber may very within wide limits e.g. from about 100:1 or more to about 1:100 or less. Usually it will be preferred to operate at an aqueous phase:organic phase feed rate ratio of about 1:5 to about 40:1, e.g. about 10:1.

Although each of the illustrated forms of plant has been described as having four separate drive motors, i.e. one for each impeller drive shaft, it is possible to replace these four motors with a single motor driving a common horizontal drive shaft linked to the individual drive shafts through appropriate gearing. If four separate motors are used, it is advisable, in the event that one motor fails, to arrange for the remaining three motors to cut out automatically. By utilising a single motor and a common drive shaft, no such automatic shut down facility is required. If the motor fails all four impellers stop simultaneously.

At start-up, in order to ensure that a dispersion of the correct type is formed in each stage, the height of the static interface may be temporarily adjusted upwardly or downwardly (e.g. by temporarily interrupting the flow of one phase and/or by syphoning out some of the other phase) until the impeller lies in the chosen continuous medium. Upon starting the impeller a dispersion of the correct type will be formed and this same type of dispersion will continue to be formed after the feed rates of the phases have been returned to the design rates and the phase ratio in the mixing chamber is at the design figure.

The impellers may be of any suitable design, for example of the pump-mix type, of the marine impeller type, or of the turbine type. It is, however, preferred to use a modified form of double-shrouded pump-mix impeller with an open "eye" in both its upper and lower faces. The impeller and its rate of rotation should be so selected that shear conditions are produced in the mixing chamber conducive to formation of a "primary dispersion" and preferably so that substantially all the mixing chamber is filled with dispersion.

- 40 -

Besides uranium extraction, the illustrated
forms of plant can be used for any other suitable form of
liquid-liquid extrraction. Furthermore the plant is not
restricted to the particular form of uranium extractant
mentioned; any other conventional uranium extractant may
be used. As Examples of other liquid-liquid extraction
processes there can be mentioned extraction of other
metals from suitable leach liquors (e.g. extraction of
copper from a pregnant aqueous, sulphuric acid-containing
copper leach liquor with an organic extractant, such as a
kerosene solution of Lix 64N or Acorga P5100). Moreover,
although the illustrated forms of plant each include four
mixer-settlers, it will be appreciated that the invention
may equally well be practiced with two, three or five or
more mixer-settlers.

It will be appreciated by those skilled in the
art that in operation of each of the illustrated forms of
plant, assuming that the weirs are set to produce, for
example, a 1:1 aqueous:organic mixing ratio in each of the
mixing chambers and that the aqueous and organic flow
rates are within the design limits of the plant, this
mixing ratio will be maintained automatically whatever the
feed rate ratio of the media to the plant. Thus, even if
the aqueous:organic feed rate ratio varies from 100:1 to
1:100, yet still the chosen mixing ratio of 1:1 will be
maintained in the mixing chamber. It will be seen
therefore that the system is self-balancing.

CLAIMS

1.       Apparatus for effecting liquid-liquid contact in a plurality of stages between an aqueous liquid medium and an organic hydrophobic liquid medium capable of undergoing mass transfer with the aqueous liquid medium, comprising:

a first mixer-settler;

a second mixer-settler adjacent the first mixer-settler;

each mixer-settler comprising:

a mixing chamber;

agitator means in the mixing chamber for mixing the aqueous and organic hydrophobic liquid media so as to form a dispersion of globules of one medium dispersed in the other, which globules are of a size such that, upon standing under gravity, the dispersion is capable of disengaging substantially completely into two separate layers;

an upper settling chamber above the mixing chamber;

a lower settling chamber below the mixing chamber; and

upper and lower baffle means extending across the mixer-settler so as to divide the mixing chamber from the upper settling chamber and the lower settling chamber respectively, each baffle means being adapted to provide a plurality of flow paths for liquid between the mixing chamber and the respective settling chamber and to permit maintenance in the respective settling chamber of conditions favouring dispersion disengagement despite turbulent mixing conditions in the mixing chamber;

means for supplying the heavier medium of the two to the mixing chamber of the first mixer-settler;

means for removing disengaged heavier medium from the lower settling chamber of the second mixer-settler;

means for supplying the lighter medium of the two to the mixing chamber of one of the first and second mixer-settlers;

means for removing disengaged lighter medium from the upper settling chamber of the other one of the first and second mixer-settlers;

weir means over which disengaged lighter medium from the upper settling chamber of the said one mixer-settler may overflow;

first conduit means for passing disengaged lighter medium that overflows the weir means from the said one mixer-settler to the mixing chamber of the said other mixer-settler; and

second conduit means for passing disengaged heavier medium from the lower settling chamber of the first mixer-settler to the mixing chamber of the second mixer-settler.


2.      Apparatus according to claim 1, comprising an elongate tank housing substantially rectangular in plan, said housing comprising a floor, a pair of elongate side walls and a pair of end walls, and said housing further being internally divided by at least one transverse internal wall extending upwardly from said floor and between said side walls so as to form at least two box sections in said housing, each said box section corresponding to a respective mixer-settler.


3.      Apparatus according to claim 2, in which each said box section is square in plan.


4.      Apparatus according to any one of claims 1 to 3, in which each mixer-settler is provided with a plurality of vertical partitions, each extending across a corner of the mixer-settler and defining a vertically extending compartment at the respective corner adapted to provide a respective flow path for one of the media.

5.      Apparatus according to claim 4, in which the first and second mixer-settlers share a common wall and in which said first conduit means comprises a respective compartment adjacent said common wall.

6.      Apparatus according to claim 5, in which said weir means is provided at said common wall between respective compartments of said first and second mixer-settlers.

7.      Apparatus according to any one of claims 4 to 6, in which said second conduit means comprises a pair of respective compartments, one in each of the first and second mixer-settlers, positioned adjacent the common wall and communicating one with another by way of a further weir means at said common wall.

8.      Apparatus according to any one of claims 4 to 6, in which said second conduit means comprises a compartment of the second mixer-settler adjacent the common wall and in which said common wall is provided with an opening providing communication between the lower settling chamber of the first mixer-settler and that compartment.

9.  Apparatus according to claim 8, in which said opening opens from a compartment of the first mixer-settler, the vertical partition defining said compartment being provided with a further opening providing communication between the lower settling chamber of the first mixer-settler and that compartment.

10.  Apparatus according to any one of claims 1 to 3, in which the first and second mixer-settlers share a common wall and in which said weir means is located in the flow path of lighter medium between the first and second mixer-settlers and has a length that is at least half the length of the common wall.

11.  Apparatus according to claim 10, in which the second conduit means comprises a riser connected to a weir box containing an outlet weir for heavier medium, over which the disengaged heavier medium from the first mixer-settler may overflow, and conduit means for receiving the heavier medium that overflows the outlet weir communicating with the mixing chamber of the second mixer-settler.

12.  Apparatus according to claim 11, in which said weir box is aligned parallel to a wall of the corresponding mixer-settler other than the or a common wall.

13. Apparatus according to claim 10, in which the second conduit means comprises conduit means providing direct connection between the lower settling chamber of the first mixer-settler and the mixing chamber of the second mixer-settler.

14. Apparatus according to claim 13, in which said directly connecting conduit means is provided with flow control means.

15. Apparatus according to any one of claims 1 to 14, which is arranged for counter-current flow of the media, in which said one mixer-settler is the second mixer-settler and said other mixer-settler is the first mixer-settler.

16. Apparatus according to any one of claims 1 to 14, which is arranged for co-current flow of the media, in which the said one mixer-settler is the first mixer-settler and the said other mixer-settler is the second mixer-settler.

Fig. 1.

Fig. 2.

Fig. 3.

2/15

FIG. 4.

FIG.5.

FIG.6.

FIG.7.

FIG.8.

0008189

Fig.9.

6/15

FIG. 10.

Fig.11.

Fig.12.

FIG. 13.

FIG.14.

FIG.15.

FIG. 16.

FIG.17.

FIG. 18.

FIG. 19.

14/15

0008189

0008189

FIG.20.

FIG.21.

**European Patent Office**

## EUROPEAN SEARCH REPORT

Application number

EP 79 30 1526

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages | Relevant to claim | |
| | DE - C - 858 986 (PETER DECKER)<br>* Pages 3,4 * | 1,13,<br>15 | B 01 D 11/04<br>C 22 B 60/02 |
| | -- | | |
| | BE - A - 664 132 (DAVY POWERGAS)<br>* Pages 1-30 * | 1 | |
| | -- | | |
| | US - A - 3 362 791 (ALLEN D. RYON)<br>* Columns 1-4 * | 1,2,15 | |
| | -- | | TECHNICAL FIELDS SEARCHED (Int.Cl.) |
| | US - A - 2 218 080 (GIACOMO BOTTARO)<br>* Pages 2,3 * | 1,15 | B 01 D 11/04<br>C 22 B 60/02<br>B 01 F 13/10<br>3/08 |
| | -- | | |
| | US - A - 3 097 071 (L. LOWES)<br>* Columns 1-4 * | 1,2,15 | |
| | -- | | |
| | US - A - 3 844 723 (SHIGERU TAKAHATA)<br>* Columns 3-8 * | 1,2,15 | |
| | -- | | CATEGORY OF CITED DOCUMENTS |
| | US - A - 3 206 288 (WAYNE C. HAZEN)<br>* Columns 2-5 * | 1 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | -- | | |
| | FR - A - 2 276 853 (FORSKNINGS-GRUPPE FOR SJELDNE JORDARTER)<br>* Pages 2,3,4 * | 1,2,4,<br>15 | |
| | ---- | | |
| | | | &: member of the same patent family, corresponding document |

The present search report has been drawn up for all claims

| Place of search | Date of completion of the search | Examiner |
|---|---|---|
| The Hague | 08-11-1979 | DE PAEPE |

EPO Form 1503.1   06.78